# EUROPÄISCHE PATENTSCHRIFT

(11) **EP 3 665 434 B1**
(45) Veröffentlichungstag und Bekanntmachung des Hinweises auf die Patenterteilung: **11.06.2025**
(21) Anmeldenummer: 18750349.5
(22) Anmeldetag: 19.07.2018
(51) Int. Cl.: G01B 21/04

(54) **MESSSYSTEM-SET**
MEASURING SYSTEM SET
ENSEMBLE DE SYSTÈMES DE MESURE

(30) Priorität: 11.08.2017 DE 102017118313
(43) Veröffentlichungstag der Anmeldung: 17.06.2020
(73) Patentinhaber: Hexagon Metrology GmbH, 35578 Wetzlar (DE)
(72) Erfinder: WIEST, Christoph, 88250 Weingarten (DE); SCHWEIGERT, Max, 88281 Schlier (DE)
(74) Vertreter: RavensPAT Patentanwälte Partnerschaft mbB
(86) Internationale Anmeldenummer: PCT/EP2018/069658
(87) Internationale Veröffentlichungsnummer: WO 2019/029972

(56) Entgegenhaltungen:
- EP-A1- 0 404 275
- EP-A1- 1 401 612
- DE-A1- 102009 017 935
- DE-A1- 102015 108 180

## Beschreibung

### Stand der Technik

Ein bekanntes Messsystem für eine Werkzeugmaschine umfasst einen Messtaster, einen Sender und einen Empfänger. Die Komponenten des Messsystems sind dabei derart aufeinander abgestimmt, sodass sie zusammenarbeiten. Messsysteme sind beispielsweise aus der DE 10 2015 108180 A1, EP 0 404 275 A1, EP 1 401 612 A1 oder der DE 10 2009 017 935 A1 bekannt. Außerdem ist bekannt, dass die Komponenten des Messsystems derart ausbildbar sind, dass sie nur untereinander und nicht mit Komponenten eines weiteren, vom ersten Messsystem verschiedenen Messsystems zusammenarbeiten.

### Aufgabe und Vorteile der Erfindung

Aufgabe der vorliegenden Erfindung ist es, ein Messsystem derart weiterzubilden, sodass eine verbesserte Zusammenarbeit von Komponenten des Messsystems realisierbar ist.

Die Aufgabe wird durch die Merkmale des unabhängigen Anspruchs 1 gelöst.

In den weiteren Ansprüchen sind vorteilhafte und zweckmäßige Ausführungsformen der Erfindung angegeben.

Die Erfindung geht von einem Messsystem-Set bestehend aus mehreren Komponenten aus.

Vorteilhafterweise bilden mehrere, insbesondere unterschiedliche Komponenten des Messsystem-Sets ein Messsystem. Das Messsystem ist beispielsweise dazu ausgebildet in einer Bearbeitungsmaschine verwendet zu werden. Das Messsystem findet z.B. Verwendung in einer Messmaschine, z.B. in einer Koordinatenmessmaschine und/oder in einer Werkzeugmaschine, z.B. in einem Dreh- und/oder Fräszentrum. Das Messsystem ist z.B. als ein Bearbeitungsmaschinenmesssystem, beispielsweise als ein Messmaschinenmesssystem und/oder als ein Werkzeugmaschinenmesssystem ausgebildet.

Eine Komponente des Messsystem-Sets ist beispielsweise als eine Messsystemkomponente, z.B. als eine Messtasterkomponente, insbesondere als ein Messtaster vorhanden. Zum Beispiel ist die Komponente des Messsystem-Sets als ein Schaltmesstaster, als ein Toolsetter, als ein Sender und/oder als ein Empfänger ausgebildet. Der Toolsetter, der Sender und/oder der Empfänger sind vorteilhafterweise dazu ausgebildet mit dem Schaltmesstaster zusammenzuarbeiten. Der Sender ist beispielsweise als ein Messtastersender vorhanden. Der Empfänger ist beispielsweise als ein Messtasterempfänger vorhanden.

Der wesentliche Aspekt der Erfindung ist nun darin zu sehen, dass das Messsystem-Set in mindestens zwei Messsystem-Set-Komponentengruppen unterteilbar ist, wobei Komponenten einer ersten Messsystem-Set-Komponentengruppe derart ausgebildet sind, diese Komponenten der ersten Messsystem-Set-Komponentengruppe mit einer Individualisierung zu versehen, sodass die Komponenten der ersten Messsystem-Set-Komponentengruppe ausschließlich nur noch mit Komponenten dieser ersten Messsystem-Set-Komponentengruppe und nicht mit Komponenten einer weiteren Messsystem-Set-Komponentengruppe zusammenarbeiten. Hierdurch ist eine Zusammenarbeit der Komponenten des Messsystem-Sets verbessert.

Bekannt ist, dass Komponenten eines Messsystem-Sets, z.B. Komponenten eines Messsystem-Sets eines ersten Herstellers nur untereinander bzw. miteinander zusammenarbeiten. Z.B**.** sind Komponenten eines Messsystem-Sets des ersten Herstellers derart ausgebildet, dass sie nur mit weiteren Komponenten des ersten Herstellers zusammenarbeiten und nicht mit Komponenten eines weiteren Messsystem-Sets eines zweiten Herstellers.

Alle Komponenten des Messsystem-Sets sind mit einer Individualisierung versehen, sich somit z.B. überindividualisieren lassen, sodass diese Komponenten des Messsystem-Sets in mindestens zwei Gruppen unterteilbar sind, wobei eine Komponente einer ersten Gruppe vorteilhafterweise derart individualisiert ist, dass sie nicht mit Komponenten der zweiten Gruppe zusammenarbeitet. Bevorzugterweise unterscheidet sich eine Komponente der ersten Gruppe von einer Komponente der zweiten Gruppe bis auf die Individualisierung nicht.

Vorstellbar ist auch, dass z.B. eine Komponente des Messsystem-Sets derart individualisierbar ist, dass diese Komponente mit zumindest zwei weiteren individualisierten Komponenten des Messsystem-Sets zusammenarbeitet, wobei die beiden weiteren Komponenten unterschiedlichen Komponentengruppen des Messsystem-Sets angehören. Vorteilhafterweise sind die beiden weiteren Komponenten derart individualisiert vorhanden, sodass sie nicht zusammenarbeiten.

Weiter wird vorgeschlagen, dass die Komponenten der ersten Messsystem-Set-Komponentengruppe derart ausgebildet sind, diese Komponenten der Messsystem-Set-Komponentengruppe mit einer Individualisierung zu versehen, sodass die Komponente der ersten Messsystem-Set-Komponentengruppe ausschließlich nur noch mit Steuerungskomponenten von Bearbeitungsmaschinen einer definierten Gruppe von Bearbeitungsmaschinen zusammenarbeitet und nicht mit Bearbeitungsmaschinen einer weiteren Gruppe von Bearbeitungsmaschinen, wobei die Steuerungskomponenten der definierten Gruppe von Bearbeitungsmaschinen dazu ausgebildet sind, mit einer Individualisierung versehen zu werden. Hierdurch ist eine Verwechslung oder Vertauschung von Messsystem-Set-Komponenten für die Zusammenarbeit mit der Bearbeitungsmaschine verhindert und eine Zusammenarbeit der Komponenten mit den Steuerungskomponenten verbessert.

Die Bearbeitungsmaschine kann als Messmaschine und/oder als Werkzeugmaschine ausgebildet sein. Die Werkzeugmaschine ist beispielsweise dazu ausgebildet, Rohlinge mechanisch, z.B. zerspanend zu bearbeiten und mittels zumindest einer Komponente des Messsystem-Sets prüfen zu können. Die Bearbeitungsmaschine umfasst eine Steuerungskomponente, welche vorteilhafterweise dazu ausgebildet ist, mit Komponenten des Messsystems-Sets, insbesondere mit Komponenten einer insbesondere einzigen, bestimmten Komponentengruppe des Messsystem-Sets zusammenzuarbeiten. Die Steuerungskomponenten der Bearbeitungsmaschine sind vorteilhafterweise dazu ausgebildet mit einer Komponente des Messsystem-Sets kommunizieren zu können. Insbesondere ist die Steuerungskomponenten der Bearbeitungsmaschine dazu ausgebildet mit einer definiert individualisierten Komponente des Messsystem-Sets, z.B. mit einer Komponente einer definierten Komponentengruppe des Messsystem-Set, zu kommunizieren. Vorteilhafterweise ist eine Steuerungskomponente einer Bearbeitungsmaschine derart vorhanden, dass sie sich gleichsam, wie die Komponenten des Messsystem-Sets individualisieren lässt.

Beispielsweise ist die Komponente der ersten Messsystem-Set-Komponentengruppe derart individualisierbar, dass die Komponente der ersten Messsystem-Set-Komponentengruppe ausschließlich mit Bearbeitungsmaschinen eines einzigen Herstellers zusammenarbeitet und nicht mit Bearbeitungsmaschinen eines weiteren Herstellers. Insbesondere ist die Komponente der ersten Messsystem-Set-Komponentengruppe derart individualisierbar, dass die Komponente der ersten Messsystem-Set-Komponentengruppe ausschließlich mit einer einzigen Variante einer Bearbeitungsmaschine und/oder einer einzigen Ausführungsform einer Bearbeitungsmaschine und/oder z.B. einer Bearbeitungsmaschinenserie zusammenarbeitet.

Bevorzugterweise umfasst die einzige Ausführungsform einer Bearbeitungsmaschine und/oder z.B. die Bearbeitungsmaschinenserie Steuerungskomponenten, welche derart individualisierbar sind, dass die einzige Ausführungsform einer Bearbeitungsmaschine und/oder z.B. die Bearbeitungsmaschinenserie mit einer Komponente der ersten Messsystem-Set-Komponentengruppe zusammenarbeitet. Insbesondere ist die einzige Ausführungsform einer Bearbeitungsmaschine und/oder z.B. die Bearbeitungsmaschinenserie derart individualisierbar, dass sie ausschließlich mit einer Komponente der ersten Messsystem-Set-Komponentengruppe zusammenarbeitet.

Die Komponenten des Messsystem-Sets sind kodiert.

Vorteilhafterweise besitzt eine Komponente ein Kodierungsmittel. Beispielsweise sind Zustände der Kodierungsmittel z.B. mechanisch und/oder z.B. elektronisch veränderbar, z.B. schaltbar, vorhanden, sodass eine Kodierung und damit eine Individualisierung der Komponente realisierbar ist. Beispielsweise umfasst die Komponente einen elektronischen Speicher, in welchem eine definierte Zeichenfolge ablegbar ist. Bevorzugterweise umfasst die Komponente Abgleichmittel, mit welchen die Individualisierung, insbesondere die Kodierung, z.B. die im elektronischen Speicher abgelegte, definierte Zeichenfolge, mit einer Individualisierung, z.B. einer Kodierung einer weiteren Komponente abgleichbar ist. Beispielsweise ist die Individualisierung, z.B. die Kodierung, insbesondere die Zeichenfolge, unveränderbar, unlöschbar und/oder unüberschreibbar vorhanden. Denkbar ist außerdem, dass die Komponente eine Schaltung und/oder ein Bauelement mit einer Schaltung aufweist, wobei die Schaltung eine Kodierung vorgibt. Denkbar ist weiterhin, dass die Schaltung ein Schalter aufweist, um die Komponente unterschiedlich kodieren zu können.

Beispielsweise ist die Steuerungskomponente einer Bearbeitungsmaschine kodierbar ausgebildet. Vorteilhafterweise umfasst die Steuerungskomponente ebenfalls Kodierungsmittel.

Die erste Komponente ist dazu ausgebildet, die eigene Kodierung bei einer Kommunikation mit einer Kodierung einer weiteren Komponente zu vergleichen und umgekehrt, wobei Komponenten des Messsystem-Sets ausschließlich zusammenarbeiten, wenn die Kodierungen der Komponenten übereinstimmen.

Vorteilhafterweise ist die Steuerungskomponente der Bearbeitungsmaschine dazu ausgebildet, die eigene Kodierung bei einer Kommunikation mit einer Kodierung einer MesssystemKomponente zu vergleichen und umgekehrt, wobei die beiden Komponenten ausschließlich zusammenarbeiten, wenn die Kodierungen übereinstimmen.

Außerdem erweist es sich von Vorteil, das den Komponenten des Messsystem-Sets eine elektronische Adresse zuordenbar ist, insbesondere mehrere verschiedene elektronische Adressen, zuordenbar sind und dass eine erste Komponente dazu ausgebildet ist, die zugeordnete elektronische Adresse bei einer Kommunikation mit einer elektronischen Adresse einer weiteren Komponente zu vergleichen und umgekehrt, wobei die Komponenten ausschließlich zusammenarbeiten, wenn die elektronischen Adressen übereinstimmen. Hierdurch ist eine Individualisierung in unterschiedliche Gruppen sonst identischer Komponenten realisiert.

Beispielsweise ist die Kodierung als elektronische Adresse z.B. als Zeichenfolge und/oder z.B. als Schaltung realisiert. Denkbar ist weiter, dass mehrere, insbesondere voneinander verschiedene elektronische Adressen einer Komponente zuordenbar sind. Bevorzugterweise gleicht eine erste Komponente bei einer Kommunikation mit einer weiteren Komponente alle ihr zugeordneten elektronischen Adressen mit der oder den elektronischen Adressen der weiteren Komponenten ab, oder umgekehrt. Sind zwei elektronische Adressen gleich, arbeiten die beiden Komponenten zusammen.

Die elektronische Adresse ist beispielsweise in einem Flash-Speicher der Komponente hinterlegbar. Die elektronische Adresse besteht vorteilhafterweise aus einer 16-bit Zeichenkette. Denkbar ist auch, dass es ausreicht, dass ein Teil der elektronischen Adressen der Komponenten, z.B. ein Teil der 16-bit Zeichenkette der Komponenten, übereinstimmen muss, damit die Komponenten zusammenarbeiten. Denkbar ist weiterhin, dass die elektronische Adresse unveränderbar, insbesondere nicht überschreibbar, im Flash-Speicher der Komponente hinterlegbar ist.

Vorteilhafterweise senden und/oder empfangen Komponenten des Messsystem-Sets z.B. optisch, z.B. im infraroten Bereich. Denkbar ist auch, dass Komponenten des Messsystem-Sets miteinander über eine Funkfrequenz kommunizieren. Beispielsweise kommunizieren ein Sender und ein Empfänger des Messsystem-Sets im optischen, z.B. im infraroten Bereich miteinander.

### Beschreibung eines Ausführungsbeispiels

Mehrere Ausführungsbeispiele werden anhand der nachstehenden schematischen Zeichnungen unter Angabe weiterer Einzelheiten und Vorteile näher erläutert.

Es zeigen:
- Figur 1: Komponenten eines Messsystem-Sets in einer perspektivischen Ansicht,
- Figur 2: eine tabellarische Darstellung einer Kodierung von drei Komponentengruppen eines Messsystem-Sets und
- Figur 3: eine Frontansicht einer Bearbeitungsmaschine mit einer Komponente eines Messsystem-Sets.

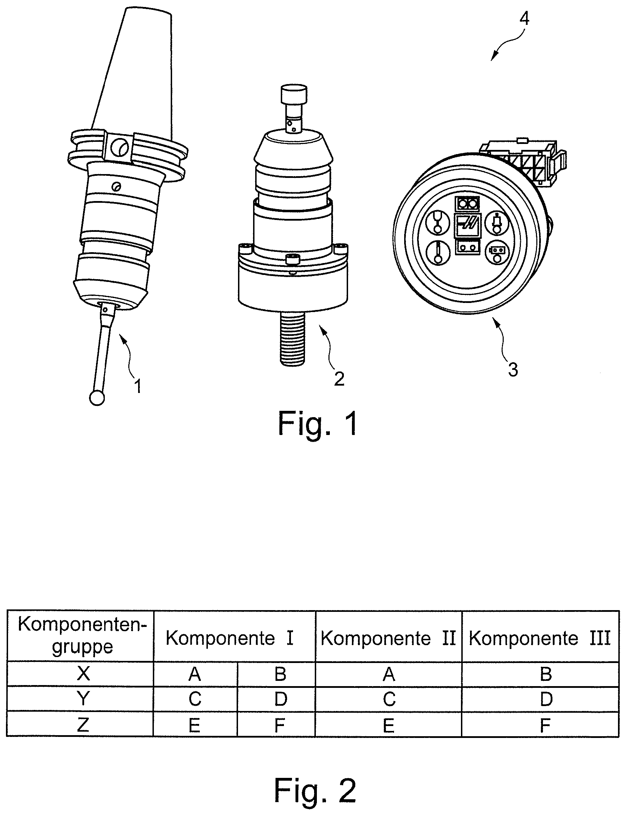

In Figur 1 sind drei zueinander verschieden ausgebildete Komponenten 1, 2, 3 eines erfindungsgemäßen Messsystem-Sets 4 gezeigt. Eine erste Komponente 1 ist beispielsweise als ein Messtaster ausgebildet, eine zweite Komponente 2 ist z.B. als ein Sender, z.B. als ein Toolsetter vorhanden und eine dritte Komponente 3 beispielsweise als ein Empfänger. Ein Messsystem-Set 4 umfasst beispielsweise mehrere erste, zweite und/oder dritte Komponenten 1, 2, 3**.**

Vorteilhafterweise sind die ersten Komponenten 1 des Messsystem-Sets 4 gleich ausgebildet und individualisierbar vorhanden, sodass die ersten Komponenten 1 des Messsystem-Sets 4 sich nach einer Individualisierung entweder gleichen und somit identisch sind oder sich nur durch die insbesondere definierte Individualisierung unterscheiden. Erste Komponenten 1 des Messsystem-Sets 4, welche sich in ihrer Individualisierung nicht unterscheiden, sind einer Komponentengruppe des Messsystem-Sets 4 zugehörig. Das vorangegangen zur ersten Komponente 1 Gesagte gilt gleichfalls für die zweite und dritte Komponente 2, 3 des Messsystem-Sets 4.

In Figur 2 ist beispielhaft dargestellt, wie Komponenten I, II und III eines Messsystem-Sets individualisierbar sind, sodass diese Komponenten I, II, III in unterschiedliche unterteilbar sind. Im vorliegenden Beispielfall nach Figur 2 sind die Komponenten I, II und III in drei unterschiedliche Komponentengruppen X, Y, Z individualisiert. Beispielsweise könnte die erste Komponenten 1 der Figur 1 der Komponente I der Tabelle aus Figur 2 zugeordnet werden, die zweite Komponente 2 der Figur 1 der Komponente II und/oder die dritte Komponente 3 der Figur 1 der Komponente III oder umgekehrt.

Komponenten I unterscheiden sich vorteilhafterweise wiederum ausschließlich durch ihre Individualisierung. Selbiges gilt beispielsweise auch für die Komponenten II und III.

Beispielsweise sind Komponenten I in einer ersten Variante mit einer Individualisierung A und einer Individualisierung B ausbildbar (Spalte 2, Tabelle Figur 2). Z.B. sind Komponenten II mit der Individualisierung A (Spalte 3, Tabelle Figur 2) und Komponenten III mit der Individualisierung B (Spalte 4, Tabelle Figur 2) ausbildbar. Hierdurch arbeiten Komponenten I mit der Individualisierung A und B z.B. nur, insbesondere ausschließlich mit Komponenten II mit der Individualisierung A und mit Komponenten III mit der Individualisierung B zusammen. Wohingegen Komponenten II mit der Individualisierung A nur mit Komponenten I mit der Individualisierung A und B zusammenarbeiten und z.B. nicht mit Komponenten III mit der Individualisierung B. Vorstellbar ist allerdings auch, dass die Komponenten I, II und/oder III jeweils mit einer einzigen Individualisierung A ausgebildet werden, sodass alle Komponenten mit der Individualisierung A zusammenarbeiten können. Die mit der Individualisierung A und/oder B versehenen Komponenten I, II und III sind damit beispielsweise einer Komponentengruppe X zugeordnet (Zeile 2, Tabelle Figur 2). Entsprechend Figur 2 können Komponenten I z.B. auch mit einer Individualisierungskombination C und D oder einer Individualisierungskombination E und F versehen werden.

Beispielsweise sind Komponenten II mit einer Individualisierung C oder mit einer Individualisierung E ausbildbar bzw. Komponenten III mit einer Individualisierung D oder mit einer Individualisierung F. Hierdurch ist ein Messsystem-Set, bestehend aus einer Gruppe von Komponenten I, II und III in z.B. drei unterschiedliche Komponentengruppen X, Y und Z unterteilbar. Vorteilhafterweise derart, dass die der Komponentengruppe X zugehörigen Komponenten I, II und III nicht mit Komponenten I, II und III einer weiteren Komponentengruppe Y und/oder Z oder umgekehrt zusammenarbeiten.

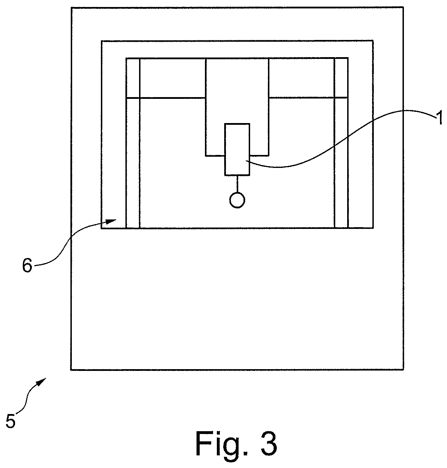

Figur 3 zeigt eine Bearbeitungsmaschine 5, z.B**.** eine Werkzeugmaschine mit einer, in einem Bearbeitungsraum 6 der Bearbeitungsmaschine 5 angeordneten ersten Komponente 1 eines Messsystems-Sets.

### Bezugszeichenliste

- 1: Komponente
- 2: Komponente
- 3: Komponente
- 4: Messsystem-Set
- 5: Bearbeitungsmaschine
- 6: Bearbeitungsraum

## Patentansprüche

1. Messsystem-Set (4) bestehend aus mehreren Komponenten (1, 2, 3), wobei alle Komponenten (1, 2, 3) des Messsystem-Sets (4) mit einer Kodierung versehen sind, wobei das Messsystem-Set (4) in mindestens zwei Messsystem-Set-Komponentengruppen unterteilbar ist, **dadurch gekennzeichnet, dass** alle Komponenten einer ersten Messsystem-Set-Komponentengruppe derart mit der Kodierung individualisiert sind, dass die Komponenten der ersten Messsystem-Set-Komponentengruppe ausschließlich nur noch mit Komponenten dieser ersten Messsystem-Set-Komponentengruppe und nicht mit Komponenten einer weiteren Messsystem-Set-Komponentengruppe zusammenarbeiten, wobei eine erste Komponente (1, 2, 3) dazu ausgebildet ist, die eigene Kodierung bei einer Kommunikation mit einer Kodierung einer weiteren Komponente (1, 2, 3) zu vergleichen und umgekehrt, wobei Komponenten (1, 2, 3) des Messsystem-Sets (4) ausschließlich zusammenarbeiten, wenn die Kodierungen der Komponenten (1, 2, 3) übereinstimmen.

2. Messsystem-Set (4) nach dem Anspruch 1, **dadurch gekennzeichnet, dass** die Komponenten der ersten Messsystem-Set-Komponentengruppe derart ausgebildet sind, diese Komponenten der ersten Messsystem-Set-Komponentengruppe mit einer Individualisierung zu versehen, sodass die Komponente der ersten Messsystem-Set-Komponentengruppe ausschließlich nur noch mit Steuerungskomponenten von Bearbeitungsmaschinen einer definierten Gruppe von Bearbeitungsmaschinen zusammenarbeitet und nicht mit Bearbeitungsmaschinen einer weiteren Gruppe von Bearbeitungsmaschinen, wobei die Steuerungskomponenten der definierten Gruppe von Bearbeitungsmaschinen dazu ausgebildet sind, mit einer Individualisierung versehen zu werden.

3. Messsystem-Set (4) nach einem der vorangegangenen Ansprüche, **dadurch gekennzeichnet, dass** den Komponenten (1, 2, 3) des Messsystem-Sets (4) eine elektronische Adresse zuordenbar ist und dass eine erste Komponente (1, 2, 3) dazu ausgebildet ist, die zugeordnete elektronische Adresse bei einer Kommunikation mit einer elektronischen Adresse einer weiteren Komponente (1, 2, 3) zu vergleichen und umgekehrt, wobei die Komponenten (1, 2, 3) ausschließlich zusammenarbeiten, wenn die elektronischen Adressen übereinstimmen.

4. Messsystem-Set (4) nach einem der vorangegangenen Ansprüche, **dadurch gekennzeichnet, dass** eine Komponente (1, 2, 3) des Messsystem-Sets (4) als ein Messtaster, als ein Sender und/oder als ein Empfänger ausgebildet ist.

5. Bearbeitungsmaschine (5) mit einer Steuerungskomponente und mit einer Komponente (1, 2, 3) des Messsystem-Sets (4) nach einem der vorangegangenen Ansprüche.

## Claims

1. Measuring system set (4) consisting of a plurality of components (1, 2, 3), wherein all components (1, 2, 3) of the measuring system set (4) are provided with a coding, wherein the measuring system set (4) can be divided into at least two measuring-system-set component groups, **characterized in that** all components of a first measuring-system-set component group are individualized with the coding in such a way that the components of the first measuring-system-set component group only cooperate with components of this first measuring-system-set component group and not with components of another measuring-system-set component group, wherein a first component (1, 2, 3) is designed to compare its own coding during communication with a coding of another component (1, 2, 3) and vice versa, wherein components (1, 2, 3) of the measuring system set (4) only cooperate if the codings of the components (1, 2, 3) match.

2. Measuring system set (4) according to Claim 1, **characterized in that** the components of the first measuring-system-set component group are designed to provide these components of the first measuring-system-set component group with an individual identification in such a way that the component of the first measuring-system-set component group only cooperates with control components of processing machines of a defined group of processing machines and not with processing machines of another group of processing machines, wherein the control components of the defined group of processing machines are designed to be provided with an individual identification.

3. Measuring system set (4) according to either one of the preceding claims, **characterized in that** an electronic address can be assigned to the components (1, 2, 3) of the measuring system set (4) and **in that** a first component (1, 2, 3) is designed to compare the assigned electronic address during communication with an electronic address of a further component (1, 2, 3) and vice versa, wherein the components (1, 2, 3) only cooperate if the electronic addresses match.

4. Measuring system set (4) according to any one of the preceding claims, **characterized in that** a component (1, 2, 3) of the measuring system set (4) is designed as a measuring sensor, as a transmitter and/or as a receiver.

5. Processing machine (5) having a control component and having a component (1, 2, 3) of the measuring system set (4) according to any one of the preceding claims.

## Revendications

1. Ensemble de systèmes de mesure (4) comprenant une pluralité de composants (1, 2, 3), tous les composants (1, 2, 3) de l'ensemble de systèmes de mesure (4) étant pourvus d'un codage, l'ensemble de systèmes de mesure (4) pouvant être divisé en au moins deux groupes de composants d'ensemble de systèmes de mesure, **caractérisé en ce que** tous les composants d'un premier groupe de composants d'ensembles de systèmes de mesure sont individualisés par le codage de telle sorte que les composants du premier groupe de composants d'ensembles de systèmes de mesure ne fonctionnent plus qu'avec des composants de ce premier groupe de composants d'ensembles de systèmes de mesure et non avec des composants d'un autre groupe de composants d'ensembles de systèmes de mesure, un premier composant (1, 2, 3) étant conçu de façon à comparer son propre codage lors d'une communication avec un codage d'un autre composant (1, 2, 3) et inversement, les composants (1, 2, 3) de l'ensemble de systèmes de mesure (4) ne fonctionnant ensemble que si les codages des composants (1, 2, 3) concordent.

2. Ensemble de systèmes de mesure (4) selon la revendication 1, **caractérisé en ce que** les composants du premier groupe de composants de l'ensemble de systèmes de mesure sont conçus de manière à ce que ces composants du premier groupe de composants de l'ensemble de systèmes de mesure soient individualisés de sorte que le composant du premier groupe de composants d'ensembles de systèmes de mesure ne fonctionne plus qu'avec les composants de commande de machines de traitement d'un groupe défini de machines de traitement et non avec les machines de traitement d'un autre groupe de machines de traitement, les composants de commande du groupe défini de machines de traitement étant conçus pour être individualisés.

3. Ensemble de systèmes de mesure (4) selon l'une des revendications précédentes, **caractérisé en ce qu'**une adresse électronique peut être attribuée aux composants (1, 2, 3) de l'ensemble de systèmes de mesure (4) et **en ce qu'**un premier composant (1, 2, 3) est conçu pour comparer l'adresse électronique attribuée lors d'une communication avec une adresse électronique d'un autre composant (1, 2, 3) et inversement, les composants (1, 2, 3) ne fonctionnant ensemble que lorsque les adresses électroniques concordent.

4. Ensemble de systèmes de mesure (4) selon l'une des revendications précédentes, **caractérisé en ce qu'**un composant (1, 2, 3) de l'ensemble de systèmes de mesure (4) est conçu sous la forme d'un palpeur de mesure, d'un émetteur et/ou d'un récepteur.

5. Machine de traitement (5) avec un composant de commande et avec un composant (1, 2, 3) de l'ensemble de système de mesure (4) selon l'une des revendications précédentes.
